# EUROPEAN PATENT SPECIFICATION

(11) **EP 3 355 555 B1**
(45) Date of publication and mention of the grant of the patent: **26.08.2020**
(21) Application number: 17153772.3
(22) Date of filing: 30.01.2017
(51) Int. Cl.: G06F 16/27, G06F 11/20, H04L 29/14, H04L 29/08

(54) **METHOD FOR AN IMPROVED PROCESSING OF NETWORK COMMUNICATION BETWEEN A TELECOMMUNICATIONS NETWORK AND AT LEAST ONE USER EQUIPMENT IN A DATABASE EMERGENCY SITUATION WITHIN THE TELECOMMUNICATIONS NETWORK, SYSTEM, PROGRAM AND COMPUTER PROGRAM PRODUCT**
VERFAHREN ZUR VERBESSERTEN VERARBEITUNG VON NETZWERKKOMMUNIKATION ZWISCHEN EINEM TELEKOMMUNIKATIONSNETZWERK UND MINDESTENS EINEM BENUTZERGERÄT IN EINEM DATENBANKNOTFALL INNERHALB DES TELEKOMMUNIKATIONSNETZWERKS, SYSTEM, PROGRAMM UND COMPUTERPROGRAMMPRODUKT
PROCÉDÉ DE TRAITEMENT AMÉLIORÉ DE COMMUNICATION RÉSEAU ENTRE UN RÉSEAU DE TÉLÉCOMMUNICATIONS ET AU MOINS UN ÉQUIPEMENT UTILISATEUR DANS UNE SITUATION D'URGENCE DE BASE DE DONNÉES AU SEIN DU RÉSEAU DE TÉLÉCOMMUNICATIONS, SYSTÈME, PROGRAMME ET PRODUIT, PROGRAMME INFORMATIQUE

(43) Date of publication of application: 01.08.2018
(73) Proprietor: Deutsche Telekom AG, 53113 Bonn (DE)
(72) Inventor: SALEM, Tarek, 53639 Königswinter (DE); KOZOREV, Evgeni, 51145 Köln (DE)
(74) Representative: Schwöbel, Thilo K.

(56) References cited:
- US-A1- 2011 211 527
- US-A1- 2013 031 252

## Description

### BACKGROUND

The present invention relates a method for an improved processing of network communication between a telecommunications network and at least one user equipment in a database emergency situation within the telecommunications network.

Furthermore, the present invention relates to a telecommunications network for an improved processing of network communication between the telecommunications network and at least one user equipment in a database emergency situation within the telecommunications network.

Additionally, the present invention relates to a system for an improved processing of network communication between a telecommunications network and at least one user equipment in a database emergency situation within the telecommunications network, wherein the system comprises the telecommunications network and the at least one user equipment.

Furthermore, the present invention relates to a program and a computer program product for an improved processing of network communication between a telecommunications network and at least one user equipment in a database emergency situation within the telecommunications network.

The concept of a central database architecture is widely used in telecommunications networks. The fundamental aim of a central data base architecture is to provide support for the decoupling of application logic on the one hand, and data on the other hand. As an example, subscription and service data located in the directory are made available to all other applications for query and update on a controlled and secure basis. Since the data stored on a central database is shared by many different applications, the non-availability of such data becomes critical for telecommunications networks to operate.

It is therefore important to have the central database as a highly performing and highly redundant system to ensure close to 100% availability. The problem is that in spite of all the measures and precautions taken, for some reason it is still not completely excluded that the central database, carrying user profiles or other data needed by the applications, fails or that the data on it are gone or lost.

In such a situation, also referred to as an emergency situation, it can take several hours to analyze the cause of such a situation, get a fix and bring the telecommunications network up again. During that time - during which the central database functionality of the telecommunications network is down - the telecommunications network is more or less completely down, i.e. - especially in case of a mobile communication network - there will be no mobile terminated calls (MTC) possible, no mobile originated calls (MOC) possible, no SMS services possible, no data services possible, nor any other service available to a user (or a user equipment) of the telecommunications network.

US 2011/211527 A1 discloses a method for using a signaling message routing node to provide a backup subscriber information management service

US 2013/031252 A1 discloses a method for executing a fail-open function in response to determining that the subscriber data storage is non-responsive.

### SUMMARY

An object of the present invention is therefore to provide a technically simple, effective and cost efficient solution for an improved processing of network communication between different network nodes of a telecommunications network and/or between the telecommunications network and at least one user equipment in a database emergency situation within the telecommunications network, such that negative effects of a failure of the central database functionality are avoided as much as possible. A further object of the present invention is to provide a corresponding telecommunications network and a corresponding system.

According to the present invention there is provided a method according to claim 1, a telecommunications network as in claim 7, a program according to claim 11 and a storage medium as in claim 12. Embodiments are further defined by the dependent claims.

It is thereby advantageously possible according to the present invention that [A1]at least part of the central database functionality is preserved by means of using the emergency database functionality, and, thus, at least part of the communication services of the telecommunications network can be provided even in case of a severe failure (or an emergency situation) of the central database functionality.

The telecommunications network according to the present invention might be a fixed-line telecommunications network or a mobile communication network. However, it is not excluded according to the present invention to implement the inventive method in a telecommunications network having both aspects (or parts) of a fixed-line telecommunications network (or being a fixed-line telecommunications network in such parts) and aspects (or parts) of a mobile communication network (or being a mobile communication network in such parts); such networks are also known under the term fixed-mobile-convergence networks (FMC networks).

The communication exchange between, on the one hand, the telecommunications network, and, on the other hand, the user equipment (but preferably the plurality of user equipment) is typically based on the transmission and reception of data packets between the telecommunications network and the at least one user equipment.

By means of the reduced database information comprising a standard profile information, it is advantageously possible to reduce the efforts required for providing the emergency database functionality: at least as regards the standard profile information, it is no longer required for the reduced database information to comprise an individual information regarding each subscriber.

By means of the reduced database information comprising - especially besides the standard profile information - specific profile information, the specific profile information being specific for an individual user or subscriber of the telecommunications network and comprising quasi-static subscriber-related information or non-subscriber-related profile information, it is advantageously possible to reduce the efforts required for providing the emergency database functionality: at least as regards the specific profile information, it is no longer required for the reduced database information to be updated in comparatively short time intervals.

Moreover, it is advantageously possible according to the present invention to provide communication services at least to a subset of user equipment connected to the telecommunications network and/or taking into account a subset of settings or profile configurations of such user equipment.

In addition, it is advantageously possible - in the second mode of operation - that the emergency database functionality, i.e. especially the corresponding stored data, is comparatively quickly available at a location where it is needed or used.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile communication network as an example of an inventive telecommunications network with a first base station entity, and a second base station entity, a user equipment, a core network, and an access network.
Figure 2 schematically illustrates the central database functionality and a plurality of application server functionalities of the inventive telecommunications network according to a first example of the invention.
Figure 3 schematically illustrates the central database functionality and a plurality of application server functionalities of the inventive telecommunications network according to a first example of the invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

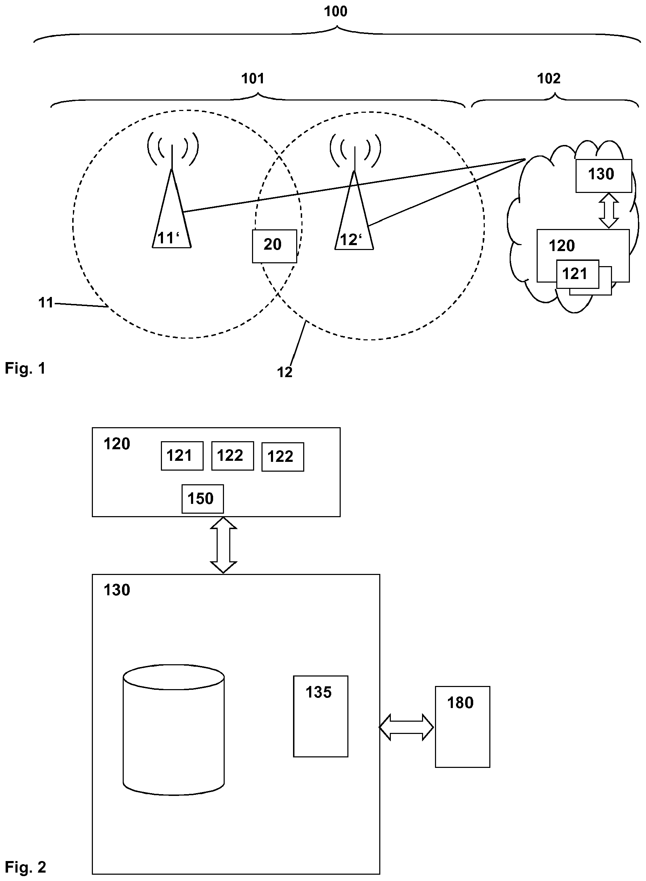

In Figure 1, a mobile communication network, especially a public land mobile network, is schematically shown as an example of an inventive telecommunications network 100. In the exemplary embodiment of Figure 1, the telecommunications network 100 comprises an access network 101 and a core network 102. The core network 102 is only schematically shown by means of a cloud representation. The telecommunications network 100 is preferably a cellular telecommunications network 100 comprising typically a plurality of network cells or radio cells, two of which are represented in Figure 1 by means of a dashed line and reference signs 11 (first radio cell) and 12 (second radio cell). In the telecommunications network 100, typically a plurality of user equipment (only one of which is schematically shown and represented by reference sign 20) are camping on the telecommunications network 100 within network cells 11, 12, i.e. the user equipment is connected to or is camping on a first base station entity 11', the first base station entity 11' serving the first radio cell 11, or a second base station entity 12', the second base station entity 12' serving the second radio cell 12. The first and second base station entities 11', 12' are typically base station entities, typically base transceiver stations, e.g. an eNodeB in case of LTE. The core network 102 typically comprises a plurality of application server functionalities 120. Furthermore, the core network 102 typically comprises a central database functionality 130.

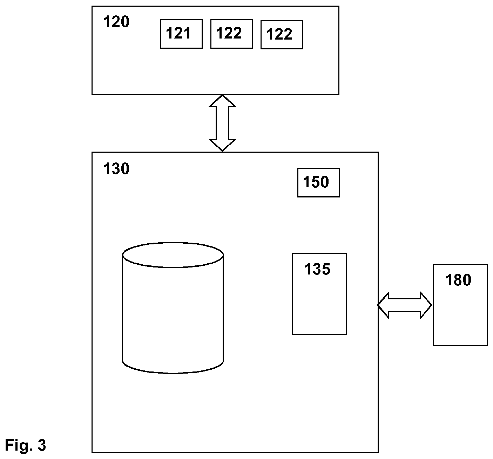

In Figures 2 and 3, the central database functionality 130 and a plurality of individual application server functionalities 121, 122, 123 of the inventive telecommunications network 100 are schematically shown according to different examples of the present invention. The individual application server functionalities 121, 122, 123 are collectively referred to by means of reference sign 120 and term application server functionalities. In case that the services (of the central database functionality 130) requested by the different application server functionalities 120 are available to them - i.e. in the first mode of operation of the central database functionality 130 - it is possible to provide communication services to the user equipment within the telecommunications network 100. In case that the central database functionality 130 is down (i.e. in the second mode of operation), an emergency database functionality 150 provides subscriber-related information or non-subscriber-related information to the application server functionalities 120. In the exemplary embodiment or example shown in Figure 2, the emergency database functionality 150 is located at or in the vicinity of the application server functionalities 120 (according to a first example of the invention). In the exemplary embodiment or example shown in Figure 3, the emergency database functionality 150 is located at or in the vicinity of the central database functionality 130 (according to a second example of the invention).

Both in Figures 2 and 3, a provisioning gateway 135 is schematically shown for provisioning the central database functionality 130. Furthermore, and likewise in both Figures 2 and 3, an IT or business system 180 is schematically shown, typically interfering with the provisioning gateways 135. Typically, an LDAP interface (Lightweight Directory Access Protocol) is used between the application server functionalities 120 and the central database functionality 130. Typically the individual application server functionalities comprise functionalities such as one or a plurality of home location register functionality/functionalities, one or a plurality of home subscriber server functionality/functionalities, one or a plurality of policy and charging rules function functionality/functionalities, one or a plurality of authentication, authorization, and accounting functionality/functionalities, one or a plurality of MMSC functionality/functionalities, one or a plurality of MMTel functionality/functionalities.

In conventionally known telecommunications networks, the data of the central database functionality are separated from the application server functionalities. This separation of the data from the applications and the provision of an open external interface to that data, removes the problem of platform and application-specific 'closed-data' scenarios prevalent in many network deployments. To complement this aspect of the data less application, typically central database products or functionalities provide robustness and reliability equal to that experienced with siloed database systems.

Typically, the central database functionality 130 is provided with geo-redundancy (e.g. three sited geo-redundancy), all such sites being synchronised at all times to ensure highest possible availability of the central database functionality 130. However, it is nevertheless not excluded (despite all these precautions and measure put in place) that the central database functionality 130 is unavailable (e.g. due to network instability, software errors (bugs), corrupted data, or the like), leading to its second mode of operation according to this invention.

Hence, according to the present invention, the emergency database functionality 150 is provided. The emergency database functionality 150 corresponds to a comparatively simple emergency database that is used until the original database (i.e. the central database functionality 130) is brought back to live. This emergency database or emergency database functionality 150 typically offers only basic services, but at least that is able to be given to the user equipment 20 requesting communication services from the telecommunications network 100; hence, a complete network outage can be avoided according to the present invention. According to the present invention, by means of the emergency database functionality 150, a simple solution is provided that might (due to the emergency database functionality 150 corresponding to reduced (and/or less often updated) information compared to the central database functionality 130) not be able to meet - during the downtime of the central database functionality 130 - all communication services requested by any user equipment 20 connected to the telecommunications network 100; however by means of the emergency database functionality 150 at least part of those requested communication services can be met - and that even during a downtime of the central database functionality 130.

According to the present invention, it is accepted that some services may not be available or that some services may run with some limitations. However, this will definitely be significantly better than having a complete outage of the telecommunications network 100. The use of the emergency database functionality 150 is typically triggered manually or automatically and only in case of an emergency situation of the central database functionality 130 (or a complete outage of the telecommunications network 100).

According to a first embodiment according to the present invention, one standard user profile is used for all users. In a very minimal form, one can think about a standard user profile for all users, i.e. all users would have exactly the same basic service profile, no matter what they have actually registered to. The main advantage of the first embodiment is its simplicity and the possibility for this standard profile to be embedded in an application-frontend side (i.e. to be integrated with the application server functionalities 120), which is an advantage in case that connectivity between such an application server functionalities frontend and the central database functionality 130 is lost. Furthermore in the context of the first embodiment, some fraud potential is accepted, i.e. in case of users (or subscribers) being granted services they are not entitled. Furthermore, some limitations are likewise accepted for users who want to attach to the telecommunications network 100 during that time and can't attach. Additionally, some further limitations are accepted with regard to mobile terminating calls (as there is typically no location area information stored in the emergency database functionality 150). Additionally, some limitations for users of business access point names (APN) and/or regarding child protection settings (e.g. barring the access to certain internet addresses) can apply to all user equipment (or, in the opposite case, to no user equipment at all) during emergency operations to be on the safe side.

According to a second embodiment according to the present invention, user specific profiles are stored in the emergency database functionality 150 with a minimal set of information that is user specific. Some communication services can only be offered by the telecommunications network 100 in case that user specific information is available. As an example, business APNs can be associated to users allowing business continuity during network outages. User specific child protection settings are able to be applied. Furthermore, user specific barrings are able to be applied if this information is retrieved - for the emergency database functionality 150 - on a regular basis from the real central database functionality 130 (e.g. on a weekly basis).

As another example, the location area (LA) needs to be known for Mobile Terminating Calls (MTC). According to a variant of the second embodiment of the present invention, the location area information - with regard to the emergency database functionality 150 - is kept in sync, i.e. updated, with the real central database functionality 130; however, this solution typically increases the complexity of such a solution. According to an alternative variant of the second embodiment of the present invention, a (quasi) static location area information is stored, in the emergency database functionality 150, for each user. By means of such a solution, it is advantageously possible to cover (i.e. to be able to provide communication services even while the central database functionality 130 is in its second mode of operation) at least the users that are typically not very mobile, and where such a (unique and static) location area information typically fits in a comparatively large number of cases. Furthermore, this corresponding static location area information can even be retrieved (in up to 70% or 80% of the cases) from the contract address. Alternatively, an analysis of the history of the location area information stored in the central database functionality 130 typically yields an even better result, e.g. if the most frequently used location area information of a certain time frame is used.

## Claims

1. Method for an improved processing of network communication between a telecommunications network (100) and at least one user equipment (20) in a database emergency situation within the telecommunications network (100), wherein the telecommunications network (100) comprises
-- network nodes providing a plurality of application server functionalities (120), as well as
-- network nodes providing a high-availability central database functionality (130),
wherein - in view of the telecommunications network (100) providing a multitude of communication services to the user equipment (20) and in a first, normal, mode of operation of the central database functionality (130) - at least one application server functionality (121) requests subscriber-related information or non-subscriber-related information from the central database functionality (130), and the central database functionality (130) provides such requested subscriber-related information or non-subscriber-related information to the at least one application server functionality (121),
wherein the telecommunications network (100) comprises at least one emergency database functionality (150), the emergency database functionality (150) providing reduced database information compared to the subscriber-related information or non-subscriber-related information provided by the central database functionality (130),
wherein in a second, emergency-related, mode of operation of the central database functionality (130), the at least one application server functionality (121) fails to receive the requested subscriber-related information or non-subscriber-related information from the central database functionality (130) and uses instead the reduced database information, provided by the emergency database functionality (150),
wherein the method comprises the step of manually or automatically switching to or triggering the second mode of operation in case that the at least one application server functionality (121) or a sufficiently large number of the plurality of application server functionalities (120) fails or fail to receive the requested subscriber-related information or non-subscriber-related information from the central database functionality (130), wherein the reduced database information comprises static location area information for each user, wherein the static location area information is based on an analysis of a history of a location area information stored in the central database functionality (130), in which the most frequently used location area information of a certain time frame is determined.

2. Method according to claim 1, wherein the reduced database information comprises a standard profile information, wherein the standard profile information is identical for at least a group of the users or subscribers of the telecommunications network (100).

3. Method according to one of the preceding claims, wherein the reduced database information comprises specific profile information, wherein the specific profile information is specific for at least one individual user or subscriber of the telecommunications network (100) and comprises at least one out of the following:
-- user-specific or subscriber-specific barring information or settings,
-- user-specific or subscriber-specific business application point name information or settings,
-- user-specific or subscriber-specific child protection information or settings.

4. Method according to one of the preceding claims, wherein the plurality of application server functionalities (120) are provided as dataless applications or functionalities within the telecommunications network (100) in case of the central database functionality (130) operating in its first mode of operation.

5. Method according to one of the preceding claims, wherein the at least one emergency database functionality (150), providing the reduced database information, is located at the network nodes providing at least part of the plurality of application server functionalities (120).

6. Method according to one of the preceding claims, wherein the telecommunications network (100) comprises - besides the at least one emergency database functionality (150) - at least one further emergency database functionality, the at least one further emergency database functionality also providing reduced database information, wherein each of the plurality of application server functionalities (120) comprises or is assigned to a dedicated further emergency database functionality.

7. Telecommunications network (100) for an improved processing of network communication between the telecommunications network (100) and at least one user equipment (20) in a database emergency situation within the telecommunications network (100), wherein the telecommunications network (100) comprises
-- network nodes configured to provide a plurality of application server functionalities (120), as well as
-- network nodes configured to provide a high-availability central database functionality (130),
wherein - in view of the telecommunications network (100) providing a multitude of communication services to the user equipment (20) and in a first, normal, mode of operation of the central database functionality (130) - at least one application server functionality (121) is configured to request subscriber-related information or non-subscriber-related information from the central database functionality (130), and the central database functionality (130) is configured to provide such requested subscriber-related information or non-subscriber-related information to the at least one application server functionality (121),
wherein the telecommunications network (100) comprises at least one emergency database functionality (150), the emergency database functionality (150) being configured to provide reduced database information compared to the subscriber-related information or non-subscriber-related information provided by the central database functionality (130),
wherein in a second, emergency-related, mode of operation of the central database functionality (130), the at least one application server functionality (121) fails to receive the requested subscriber-related information or non-subscriber-related information from the central database functionality (130) and is configured to use instead the reduced database information, provided by the emergency database functionality (150),
wherein the telecommunications network (100) is configured such that switching to or triggering the second mode of operation is performed manually or automatically in case that the at least one application server functionality (121) or a sufficiently large number of the plurality of application server functionalities (120) fails or fail to receive the requested subscriber-related information or non-subscriber-related information from the central database functionality (130), wherein the reduced database information comprises static location area information for each user, wherein the static location area information is based on an analysis of a history of a location area information stored in the central database functionality (130), in which the most frequently used location area information of a certain time frame is determined.

8. Telecommunications network (100) according to claim 7, wherein the reduced database information comprises a standard profile information, wherein the standard profile information is identical for at least a group of the users or subscribers of the telecommunications network (100).

9. Telecommunications network (100) according to one of claims 7 or 8, wherein the reduced database information comprises specific profile information, wherein the specific profile information is specific for at least one individual user or subscriber of the telecommunications network (100) and comprises at least one out of the following: -- user-specific or subscriber-specific barring information or settings,
-- user-specific or subscriber-specific business application point name information or settings,
-- user-specific or subscriber-specific child protection information or settings.

10. Telecommunications network (100) according to one of claims 7 to 9, wherein the telecommunications network (100) comprises - besides the at least one emergency database functionality (150) - at least one further emergency database functionality, the at least one further emergency database functionality also providing reduced database information, wherein each of the plurality of application server functionalities (120) comprises or is assigned to a dedicated further emergency database functionality.

11. Program comprising a computer readable program code which, when executed on a computer and/or on a network node providing at least one application server functionality and/or on a network node providing a high-availability central database functionality (130) or in part on a network node providing the at least one application server functionality and/or in part on a network node providing the high-availability central database functionality (130), causes the computer and/or the network node providing the at least one application server functionality and/or the network node providing the high-availability central database functionality (130) to perform a method according one of claims 1 to 6.

12. Storage medium comprising a computer program product for an improved processing of network communication between a telecommunications network (100) and at least one user equipment (20) in a database emergency situation within the telecommunications network (100), the computer program product comprising program code which, when executed on a computer and/or on a network node providing at least one application server functionality and/or on a network node providing a high-availability central database functionality (130) or in part on a network node providing the at least one application server functionality and/or in part on a network node providing the high-availability central database functionality (130), causes the computer and/or the network node providing the at least one application server functionality and/or the network node providing the high-availability central database functionality (130) to perform a method according one of claims 1 to 6.

## Patentansprüche

1. Verfahren für eine verbesserte Verarbeitung einer Netzkommunikation zwischen einem Telekommunikationsnetz (100) und mindestens einer Benutzerausrüstung (20) in einer Datenbank-Notfallsituation innerhalb des Telekommunikationsnetzes (100),
wobei das Telekommunikationsnetz (100) umfasst:
- Netzknoten, die mehrere AnwendungsserverFunktionalitäten bereitstellen (120), sowie
- Netzknoten, die eine zentrale Datenbankfunktionalität (130) von hoher Verfügbarkeit bereitstellen,
wobei - im Hinblick auf das Telekommunikationsnetz (100), das eine Vielzahl von Kommunikationsdiensten für die Benutzerausrüstung (20) und in einem ersten, normalen Betriebsmodus der zentralen Datenbankfunktionalität (130) bereitstellt - mindestens eine Anwendungsserverfunktionalität (121) teilnehmerbezogene Informationen oder nicht-teilnehmerbezogene Informationen von der zentralen Datenbankfunktionalität (130) anfordert, und die zentrale Datenbankfunktionalität (130) der mindestens einen Anwendungsserverfunktionalität (121) solche angeforderten teilnehmerbezogenen Informationen oder nicht-teilnehmerbezogenen Informationen zur Verfügung stellt, wobei das Telekommunikationsnetz (100) mindestens eine Notfall-Datenbankfunktionalität (150) umfasst, wobei die Notfall-Datenbankfunktionalität (150) reduzierte Datenbankinformationen im Vergleich zu den teilnehmerbezogenen Informationen oder nicht-teilnehmerbezogenen Informationen, die durch die zentrale Datenbankfunktionalität (130) bereitgestellt werden, bereitstellt,
wobei in einem zweiten, notfallbezogenen Betriebsmodus der zentralen Datenbankfunktionalität (130) die mindestens eine Anwendungsserverfunktionalität (121) die angeforderten teilnehmerbezogenen Informationen oder nicht-teilnehmerbezogene Informationen nicht von der zentralen Datenbankfunktionalität (130) empfängt und stattdessen die reduzierten Datenbankinformationen verwendet, die durch die Notfall-Datenbankfunktionalität (150) bereitgestellt werden,
wobei das Verfahren den Schritt des manuellen oder automatischen Umschaltens zu dem zweiten Betriebsmodus oder des Auslösens des zweiten Betriebsmodus umfasst, falls die mindestens eine Anwendungsserverfunktionalität (121) oder eine hinreichend große Anzahl der mehreren Anwendungsserverfunktionalitäten (120) ausfällt oder die angeforderten teilnehmerbezogenen Informationen oder nicht-teilnehmerbezogenen Informationen von der zentralen Datenbankfunktionalität (130) nicht empfängt,
wobei die reduzierten Datenbankinformationen statische Standortbereichsinformationen für jeden Benutzer umfassen,
wobei die statischen Standortbereichsinformationen auf einer Analyse einer Historie von Standortbereichsinformationen basiert, die in der zentralen Datenbankfunktionalität (130) gespeichert sind, in der die am häufigsten verwendeten Standortbereichsinformationen eines bestimmten Zeitrahmens bestimmt werden.

2. Verfahren nach Anspruch 1,
wobei die reduzierten Datenbankinformationen Standardprofilinformationen umfassen,
wobei die Standardprofilinformationen für mindestens eine Gruppe der Benutzer oder Teilnehmer des Telekommunikationsnetzes (100) identisch sind.

3. Verfahren nach einem der vorangehenden Ansprüche,
wobei die reduzierten Datenbankinformationen spezifische Profilinformationen umfassen,
wobei die spezifischen Profilinformationen für mindestens einen individuellen Benutzer oder Teilnehmer des Telekommunikationsnetzes (100) spezifisch sind und mindestens eines von Folgendem umfassen:
- benutzerspezifische oder teilnehmerspezifische Sperrinformationen oder -einstellungen,
- benutzerspezifische oder teilnehmerspezifische Informationen oder Einstellungen zum Geschäftsanwendungspunkt-Namen;
- benutzerspezifische oder teilnehmerspezifische Kinderschutzinformationen oder -einstellungen.

4. Verfahren nach einem der vorangehenden Ansprüche,
wobei die mehreren Anwendungsserverfunktionalitäten (120) als datenlose Anwendungen oder Funktionalitäten innerhalb des Telekommunikationsnetzes (100) für den Fall bereitgestellt werden, dass die zentrale Datenbankfunktionalität (130) in ihrem ersten Betriebsmodus arbeitet.

5. Verfahren nach einem der vorangehenden Ansprüche,
wobei sich die mindestens eine Notfall-Datenbankfunktionalität (150), welche die reduzierten Datenbankinformationen bereitstellt, in den Netzknoten befindet, die mindestens einen Teil der mehreren Anwendungsserverfunktionalitäten (120) bereitstellen.

6. Verfahren nach einem der vorangehenden Ansprüche,
wobei das Telekommunikationsnetz (100) - neben der mindestens einen Notfall-Datenbankfunktionalität (150) - mindestens eine weitere Notfall-Datenbankfunktionalität umfasst, wobei die mindestens eine weitere Notfall-Datenbankfunktionalität auch reduzierte Datenbankinformationen bereitstellt,
wobei insbesondere jede der mehreren Anwendungsserverfunktionalitäten (120) eine dedizierte weitere Notfall-Datenbankfunktionalität umfasst oder einer solchen zugeordnet ist.

7. Telekommunikationsnetz (100) für eine verbesserte Verarbeitung einer Netzkommunikation zwischen einem Telekommunikationsnetz (100) und mindestens einer Benutzerausrüstung (20) in einer Datenbank-Notfallsituation innerhalb des Telekommunikationsnetzes (100),
wobei das Telekommunikationsnetz (100) umfasst:
- Netzknoten, die dafür eingerichtet sind, mehrere Anwendungsserverfunktionalitäten (120) bereitzustellen, sowie
- Netzknoten, die dafür eingerichtet sind, eine zentrale Datenbankfunktionalität (130) von hoher Verfügbarkeit bereitzustellen,
wobei - im Hinblick auf das Telekommunikationsnetz (100), das eine Vielzahl von Kommunikationsdiensten für die Benutzerausrüstung (20) und in einem ersten, normalen Betriebsmodus der zentralen Datenbankfunktionalität (130) bereitstellt - mindestens eine Anwendungsserverfunktionalität (121) dafür eingerichtet ist, teilnehmerbezogene Informationen oder nicht-teilnehmerbezogene Informationen von der zentralen Datenbankfunktionalität (130) anzufordern, und die zentrale Datenbankfunktionalität (130) dafür eingerichtet ist, der mindestens einen Anwendungsserverfunktionalität (121) solche angeforderten teilnehmerbezogenen Informationen oder nicht-teilnehmerbezogenen Informationen zur Verfügung zu stellen, wobei das Telekommunikationsnetz (100) mindestens eine Notfall-Datenbankfunktionalität (150) umfasst, wobei die Notfall-Datenbankfunktionalität (150) dafür eingerichtet ist, reduzierte Datenbankinformationen im Vergleich zu den teilnehmerbezogenen Informationen oder nicht-teilnehmerbezogenen Informationen, die durch die zentrale Datenbankfunktionalität (130) bereitgestellt werden, bereitzustellen,
wobei in einem zweiten, notfallbezogenen Betriebsmodus der zentralen Datenbankfunktionalität (130) die mindestens eine Anwendungsserverfunktionalität (121) die angeforderten teilnehmerbezogenen Informationen oder nicht-teilnehmerbezogene Informationen nicht von der zentralen Datenbankfunktionalität (130) empfängt und dafür eingerichtet ist, stattdessen die reduzierten Datenbankinformationen zu verwenden, die durch die Notfall-Datenbankfunktionalität (150) bereitgestellt werden,
wobei das Telekommunikationsnetz (100) so eingerichtet ist, dass das Umschalten zu dem zweiten Betriebsmodus oder das Auslösen des zweiten Betriebsmodus manuell oder automatisch durchgeführt wird, falls die mindestens eine Anwendungsserverfunktionalität (121) oder eine hinreichend große Anzahl der mehreren Anwendungsserverfunktionalitäten (120) ausfällt oder die angeforderten teilnehmerbezogenen Informationen oder nicht-teilnehmerbezogenen Informationen von der zentralen Datenbankfunktionalität (130) nicht empfängt,
wobei die reduzierten Datenbankinformationen statische Standortbereichsinformationen für jeden Benutzer umfassen, wobei die statischen Standortbereichsinformationen auf einer Analyse einer Historie von Standortbereichsinformationen basiert, die in der zentralen Datenbankfunktionalität (130) gespeichert sind, in der die am häufigsten verwendeten Standortbereichsinformationen eines bestimmten Zeitrahmens bestimmt werden.

8. Telekommunikationsnetz (100) nach Anspruch 7,
wobei die reduzierten Datenbankinformationen Standardprofilinformationen umfassen, wobei die Standardprofilinformationen für mindestens eine Gruppe der Benutzer oder Teilnehmer des Telekommunikationsnetzes (100) identisch sind.

9. Telekommunikationsnetz (100) nach einem der Ansprüche 7 und 8,
wobei die reduzierten Datenbankinformationen spezifische Profilinformationen umfassen,
wobei die spezifischen Profilinformationen für mindestens einen individuellen Benutzer oder Teilnehmer des Telekommunikationsnetzes (100) spezifisch sind und mindestens eines von Folgendem umfassen:
- benutzerspezifische oder teilnehmerspezifische Sperrinformationen oder -einstellungen,
- benutzerspezifische oder teilnehmerspezifische Informationen oder Einstellungen zum Geschäftsanwendungspunkt-Namen;
- benutzerspezifische oder teilnehmerspezifische Kinderschutzinformationen oder -einstellungen.

10. Telekommunikationsnetz (100) nach einem der Ansprüche 7 bis 9,
wobei das Telekommunikationsnetz (100) - neben der mindestens einen Notfall-Datenbankfunktionalität (150) - mindestens eine weitere Notfall-Datenbankfunktionalität umfasst, wobei die mindestens eine weitere Notfall-Datenbankfunktionalität auch reduzierte Datenbankinformationen bereitstellt,
wobei jede der mehreren Anwendungsserverfunktionalitäten (120) eine dedizierte weitere Notfall-Datenbankfunktionalität umfasst oder einer solchen zugeordnet ist.

11. Programm, umfassend einen computerlesbaren Programmcode, der, wenn er auf einem Computer und/oder in einem Netzknoten, der mindestens eine Anwendungsserverfunktionalität bereitstellt, und/oder in einem Netzknoten, der eine zentrale Datenbankfunktionalität (130) von hoher Verfügbarkeit bereitstellt, oder teilweise in einem Netzknoten, der die mindestens eine Anwendungsserverfunktionalität bereitstellt, und/oder teilweise in einem Netzknoten, der die zentrale Datenbankfunktionalität (130) von hoher Verfügbarkeit bereitstellt, ausgeführt wird, den Computer und/oder den Netzknoten, der die mindestens eine Anwendungsserverfunktionalität bereitstellt, und/oder den Netzknoten, der die zentrale Datenbankfunktionalität (130) von hoher Verfügbarkeit bereitstellt, veranlasst, ein Verfahren nach einem der Ansprüche 1 bis 6 durchzuführen.

12. Speichermedium, umfassend ein Computerprogrammprodukt für eine verbesserte Verarbeitung einer Netzkommunikation zwischen einem Telekommunikationsnetz (100) und mindestens einer Benutzerausrüstung (20) in einer Datenbank-Notfallsituation innerhalb des Telekommunikationsnetzes (100), wobei das Computerprogrammprodukt Programmcode umfasst, der, wenn er auf einem Computer und/oder in einem Netzknoten, der mindestens eine Anwendungsserverfunktionalität bereitstellt, und/oder in einem Netzknoten, der eine zentrale Datenbankfunktionalität (130) von hoher Verfügbarkeit bereitstellt, oder teilweise in einem Netzknoten, der die mindestens eine Anwendungsserverfunktionalität bereitstellt, und/oder teilweise in einem Netzknoten, der die zentrale Datenbankfunktionalität (130) von hoher Verfügbarkeit bereitstellt, ausgeführt wird, den Computer und/oder den Netzknoten, der die mindestens eine Anwendungsserverfunktionalität bereitstellt, und/oder den Netzknoten, der die zentrale Datenbankfunktionalität (130) von hoher Verfügbarkeit bereitstellt, veranlasst, ein Verfahren nach einem der Ansprüche 1 bis 6 durchzuführen.

## Revendications

1. Procédé de traitement amélioré de communication de réseau entre un réseau de télécommunications (100) et au moins un équipement d'utilisateur (20) dans une situation d'urgence de base de données au sein du réseau de télécommunications (100), dans lequel le réseau de télécommunications (100) comprend :
- des nœuds de réseau fournissant une pluralité de fonctionnalités de serveur d'application (120), ainsi que
- des nœuds de réseau fournissant une fonctionnalité de base de données centrale à haute disponibilité (130),
dans lequel - afin que le réseau de télécommunications (100) fournisse une multitude de services de communication à l'équipement d'utilisateur (20) et dans un premier mode de fonctionnement normal de la fonctionnalité de base de données centrale (130) - au moins une fonctionnalité de serveur d'application (121) demande des informations relatives à un abonné ou des informations relatives à un non-abonné à la fonctionnalité de base de données centrale (130), et la fonctionnalité de base de données centrale (130) fournit de telles informations demandées relatives à l'abonné ou relatives au non-abonné à l'au moins une fonctionnalité de serveur d'application (121),
dans lequel le réseau de télécommunications (100) comprend au moins une fonctionnalité de base de données d'urgence (150), la fonctionnalité de base de données d'urgence (150) fournissant des informations réduites de base de données comparativement aux informations relatives à l'abonné ou aux informations relatives au non-abonné fournies par la fonctionnalité de base de données centrale (130),
dans lequel dans un second mode de fonctionnement, lié à une situation d'urgence, de la fonctionnalité de base de données centrale (130), l'au moins une fonctionnalité de serveur d'application (121) ne parvient pas à recevoir les informations demandées relatives à l'abonné ou relatives au non-abonné en provenance de la fonctionnalité de base de données centrale (130) et utilise à la place de celles-ci les informations réduites de base de données, fournies par la fonctionnalité de base de données d'urgence (150),
dans lequel le procédé comprend l'étape consistant à passer au second mode de fonctionnement ou à le déclencher, manuellement ou automatiquement, dans le cas où l'au moins une fonctionnalité de serveur d'application (121) ou un nombre suffisamment grand de fonctionnalités de la pluralité de fonctionnalités de serveur d'application (120) ne parviendrai(en)t pas à recevoir les informations demandées relatives à l'abonné ou relatives au non-abonné en provenance de la fonctionnalité de base de données centrale (130), dans lequel les informations réduites de base de données comprennent des informations de zone de localisation statique de chaque utilisateur, dans lequel les informations de zone de localisation statique sont fondées sur une analyse d'historique d'informations de zone de localisation stockées dans la fonctionnalité de base de données centrale (130), dans laquelle sont déterminées les informations de zone de localisation le plus fréquemment utilisées sur une certaine période de temps.

2. Procédé selon la revendication 1, dans lequel les informations réduites de base de données comprennent une information de profil standard, dans lequel l'information de profil standard est identique pour au moins un groupe des utilisateurs ou abonnés du réseau de télécommunications (100).

3. Procédé selon l'une des revendications précédentes, dans lequel les informations réduites de base de données comprennent des informations spécifiques de profil, dans lequel les informations spécifiques de profil sont spécifiques à au moins un utilisateur ou abonné individuel du réseau de télécommunications (100) et comprennent :
- des informations ou paramètres d'interdiction spécifiques à l'utilisateur ou spécifiques à l'abonné, et/ou
- des informations ou paramètres de nom de point d'accès d'application d'entreprise spécifiques à l'utilisateur ou spécifiques à l'abonné, et/ou
- des informations ou paramètres de protection des enfants, spécifiques à l'utilisateur ou spécifiques à l'abonné.

4. Procédé selon l'une des revendications précédentes, dans lequel la pluralité de fonctionnalités de serveur d'application (120) est fournie sous la forme d'applications ou de fonctionnalités sans données au sein du réseau de télécommunications (100) en cas de fonctionnement de la fonctionnalité de base de données centrale (130) dans son premier mode de fonctionnement.

5. Procédé selon l'une des revendications précédentes, dans lequel l'au moins une fonctionnalité de base de données d'urgence (150) fournissant les informations réduites de base de données, se situe au niveau des nœuds de réseau fournissant au moins une partie de la pluralité de fonctionnalités de serveur d'application (120).

6. Procédé selon l'une des revendications précédentes, dans lequel le réseau de télécommunications (100) comprend - outre l'au moins une fonctionnalité de base de données d'urgence (150) - au moins une fonctionnalité supplémentaire de base de données d'urgence, l'au moins une fonctionnalité supplémentaire de base de données d'urgence fournissant également des informations réduites de base de données, dans lequel chacune des fonctionnalités de la pluralité de fonctionnalités de serveur d'application (120) comprend ou est attribuée à une fonctionnalité supplémentaire dédiée de base de données d'urgence.

7. Réseau de télécommunications (100) permettant un traitement amélioré de communication de réseau entre le réseau de télécommunications (100) et au moins un équipement d'utilisateur (20) dans une situation d'urgence de base de données au sein du réseau de télécommunications (100), dans lequel le réseau de télécommunications (100) comprend :
- des nœuds de réseau configurés pour fournir une pluralité de fonctionnalités de serveur d'application (120), ainsi que
- des nœuds de réseau configurés pour fournir une fonctionnalité de base de données centrale à haute disponibilité (130),
dans lequel - afin que le réseau de télécommunications (100) fournisse une multitude de services de communication à l'équipement d'utilisateur (20) et dans un premier mode de fonctionnement normal de la fonctionnalité de base de données centrale (130) - au moins une fonctionnalité de serveur d'application (121) est configurée pour demander des informations relatives à un abonné ou des informations relatives à un non-abonné à la fonctionnalité de base de données centrale (130), et la fonctionnalité de base de données centrale (130) est configurée pour fournir de telles informations demandées relatives à l'abonné ou relatives au non-abonné à l'au moins une fonctionnalité de serveur d'application (121),
dans lequel le réseau de télécommunications (100) comprend au moins une fonctionnalité de base de données d'urgence (150), la fonctionnalité de base de données d'urgence (150) étant configurée pour fournir des informations réduites de base de données comparativement aux informations relatives à l'abonné ou aux informations relatives au non-abonné fournies par la fonctionnalité de base de données centrale (130),
dans lequel dans un second mode de fonctionnement, lié à une situation d'urgence, de la fonctionnalité de base de données centrale (130), l'au moins une fonctionnalité de serveur d'application (121) ne parvient pas à recevoir les informations demandées relatives à l'abonné ou relatives au non-abonné en provenance de la fonctionnalité de base de données centrale (130) et est configurée pour utiliser à la place de celles-ci les informations réduites de base de données, fournies par la fonctionnalité de base de données d'urgence (150),
dans lequel le réseau de télécommunications (100) est configuré de telle sorte que le passage au second mode de fonctionnement ou son déclenchement est effectué manuellement ou automatiquement dans le cas où l'au moins une fonctionnalité de serveur d'application (121) ou un nombre suffisamment grand de fonctionnalités de la pluralité de fonctionnalités de serveur d'application (120) ne parviendrai(en)t pas à recevoir les informations demandées relatives à l'abonné ou relatives au non-abonné en provenance de la fonctionnalité de base de données centrale (130),
dans lequel les informations réduites de base de données comprennent des informations de zone de localisation statique de chaque utilisateur, dans lequel les informations de zone de localisation statique sont fondées sur une analyse d'historique d'informations de zone de localisation stockées dans la fonctionnalité de base de données centrale (130), dans laquelle sont déterminées les informations de zone de localisation le plus fréquemment utilisées sur une certaine période de temps.

8. Réseau de télécommunications (100) selon la revendication 7, dans lequel les informations réduites de base de données comprennent une information de profil standard, dans lequel l'information de profil standard est identique pour au moins un groupe des utilisateurs ou abonnés du réseau de télécommunications (100).

9. Réseau de télécommunications (100) selon l'une des revendications 7 et 8, dans lequel les informations réduites de base de données comprennent des informations spécifiques de profil, dans lequel les informations spécifiques de profil sont spécifiques à au moins un utilisateur ou abonné individuel du réseau de télécommunications (100) et comprennent :
- des informations ou paramètres d'interdiction spécifiques à l'utilisateur ou spécifiques à l'abonné, et/ou
- des informations ou paramètres de nom de point d'accès d'application d'entreprise spécifiques à l'utilisateur ou spécifiques à l'abonné, et/ou
- des informations ou paramètres de protection des enfants, spécifiques à l'utilisateur ou spécifiques à l'abonné.

10. Réseau de télécommunications (100) l'une des revendications 7 à 9, dans lequel le réseau de télécommunications (100) comprend - outre l'au moins une fonctionnalité de base de données d'urgence (150) - au moins une fonctionnalité supplémentaire de base de données d'urgence, l'au moins une fonctionnalité supplémentaire de base de données d'urgence fournissant également des informations réduites de base de données, dans lequel chacune des fonctionnalités de la pluralité de fonctionnalités de serveur d'application (120) comprend ou est attribuée à une fonctionnalité supplémentaire dédiée de base de données d'urgence.

11. Programme comprenant un code de programme lisible par ordinateur, qui, lorsqu'il est exécuté sur un ordinateur et/ou sur un nœud de réseau fournissant au moins une fonctionnalité de serveur d'application et/ou sur un nœud de réseau fournissant une fonctionnalité de base de données centrale à haute disponibilité (130), ou en partie sur un nœud de réseau fournissant l'au moins une fonctionnalité de serveur d'application et/ou en partie sur un nœud de réseau fournissant la fonctionnalité de base de données centrale à haute disponibilité (130), fait mettre en œuvre à l'ordinateur et/ou au nœud de réseau fournissant l'au moins une fonctionnalité de serveur d'application et/ou au nœud de réseau fournissant la fonctionnalité de base de données centrale à haute disponibilité (130), un procédé selon l'une des revendications 1 à 6.

12. Support de stockage comprenant un produit-programme informatique permettant un traitement amélioré de communication de réseau entre un réseau de télécommunications (100) et au moins un équipement d'utilisateur (20) dans une situation d'urgence de base de données au sein du réseau de télécommunications (100), le produit-programme informatique comprenant un code de programme qui, lorsqu'il est exécuté sur un ordinateur et/ou sur un nœud de réseau fournissant au moins une fonctionnalité de serveur d'application et/ou sur un nœud de réseau fournissant une fonctionnalité de base de données centrale à haute disponibilité (130), ou en partie sur un nœud de réseau fournissant l'au moins une fonctionnalité de serveur d'application et/ou en partie sur un nœud de réseau fournissant la fonctionnalité de base de données centrale à haute disponibilité (130), fait mettre en œuvre à l'ordinateur et/ou au nœud de réseau fournissant l'au moins une fonctionnalité de serveur d'application et/ou au nœud de réseau fournissant la fonctionnalité de base de données centrale à haute disponibilité (130), un procédé selon l'une des revendications 1 à 6.
